# EUROPEAN PATENT APPLICATION

(11) **EP 3 995 956 A1**
(43) Date of publication of application: **11.05.2022**
(21) Application number: 21192514.4
(22) Date of filing: 23.08.2021
(51) Int. Cl.: G06F 9/50

(54) **INFORMATION PROCESSING APPARATUS, METHOD OF CONTROLLING INFORMATION PROCESSING APPARATUS, AND PROGRAM FOR CONTROLLING INFORMATION PROCESSING APPARATUS**

(30) Priority: 05.11.2020 JP 2020185269
(71) Applicant: FUJITSU LIMITED, Kanagawa 211-8588 (JP)
(72) Inventor: NAGASUE, Kenichi, Fukuoka-shi, 814-8588 (JP); IKKAKU, Kento, Kawasaki-shi, 211-8588 (JP)
(74) Representative: Haseltine Lake Kempner LLP

(57) **Abstract**

A method, an apparatus and a medium storing a program for controlling information processing apparatus that manages a plurality of processing nodes each including a buffer and a processor that processes data held in the buffer is disclosed. The method includes predicting a boundary between processed data and unprocessed data in the buffer at a predicted reaching time at which a resource load of a certain processing node during data processing will reach a predetermined amount; and transferring, in reverse processing order toward the boundary, the unprocessed data to another processing node that will take over the data processing.

## Description

### FIELD

The embodiments discussed herein are related to an information processing apparatus, a method of controlling an information processing apparatus, and a program for controlling an information processing apparatus.

### BACKGROUND

A virtual machine technology or a container technology is known as a method of constructing an execution environment for a plurality of applications on a data processing system. There is also known a live migration technology for migrating a virtual machine to another physical machine without stopping the virtual machine.

For example, a method has been proposed in which, during live migration of a virtual machine due to a failure therein, a difference between the number of test packets transmitted from a transmission container and the number of test packets received in a reception container is obtained to evaluate a service interruption time of the virtual machine. (See for example, Japanese Laid-open Patent Publication No. 2017-167822.)

For transferring data from a transfer source to a transfer destination, there has been proposed a method of inhibiting overwrite of data by transferring the data starting with a start address or an end address depending on which of the head addresses of the transfer source and the transfer destination is larger than the other. (See for example, Japanese Laid-open Patent Publication No. 2007-164552.)

For example, an edge computing method in which processing nodes are distributed and arranged near a terminal may have a resource shortage during execution of data processing because the scale of resources of each processing node is smaller than that of a cloud or the like. In a case where a resource shortage is predicted, the processing node is switched to another processing node having available resources during execution of the data processing after data to be processed is transferred to the other processing node, thereby suppressing degradation in processing performance due to the resource shortage.

However, when a resource change tendency is incorrectly predicted, part of data transferred by a processing node switching time is wastefully processed by the processing node of the switching source. Alternatively, data deficiency may occur in which the transfer of data to be processed by the processing node of the switching destination is not completed by the switching time.

In one aspect, an object of the present disclosure is to reduce an excess or deficiency of data transferred to a processing node that will take over data processing.

### SUMMARY

According to an aspect of the embodiments, a method of controlling an information processing apparatus managing a plurality of processing nodes each including a buffer and a processor that processes data held in the buffer, the method comprising predicting a boundary between processed data and unprocessed data in the buffer at a predicted reaching time at which a resource load of a certain processing node during data processing will reach a predetermined amount, and transferring, in reverse processing order toward the boundary, the unprocessed data to another processing node that will take over the data processing.

### BRIEF DESCRIPTION OF DRAWINGS

FIG. 1 is a block diagram illustrating an example of a data processing system according to an embodiment;
FIG. 2 is an explanatory diagram illustrating an example of an operation of the data processing system in FIG. 1;
FIG. 3 is a block diagram illustrating an example of a data processing system according to another embodiment;
FIG. 4 is an explanatory diagram illustrating an example of an operation of the data processing system in FIG. 3;
FIG. 5 is an explanatory diagram illustrating another example of an operation of the data processing system in FIG. 3;
FIG. 6 is an explanatory diagram illustrating still another example of an operation of the data processing system in FIG. 3;
FIG. 7 is a flowchart presenting an example of an operation of a representative node in FIG. 3;
FIG. 8 is a flowchart presenting an example of processing at step S100 in FIG. 7;
FIG. 9 is a flowchart presenting an example of processing at step S200 in FIG. 8; and
FIG. 10 is an explanatory diagram illustrating examples of API used for data transfer between the representative node and each edge node in FIG. 3.

### DESCRIPTION OF EMBODIMENTS

Embodiments will be described below using the drawings.

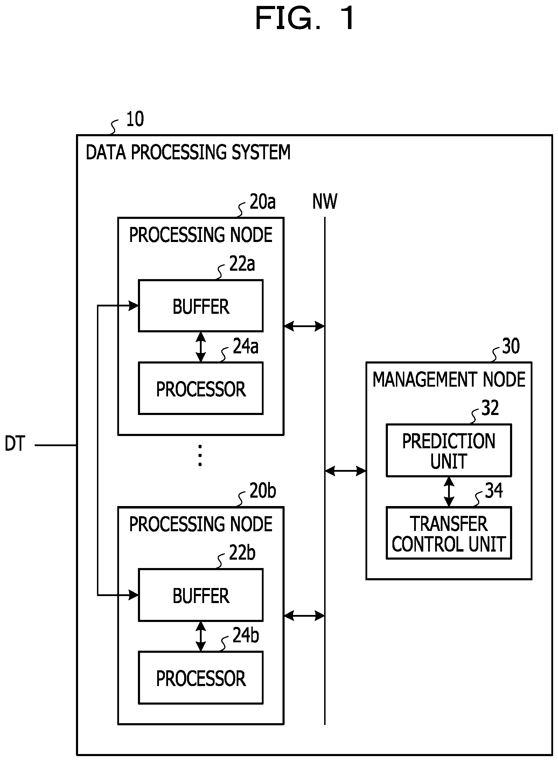

FIG. 1 illustrates an example of a data processing system according to an embodiment. A data processing system 10 illustrated in FIG. 1 includes multiple processing nodes 20 (20a and 20b) that process data DT and a management node 30 coupled to the processing nodes 20 via a network NW. For example, the data processing system 10 is constructed to implement edge computing. Each of the processing nodes 20 functions as an edge node, and the management node 30 is an example of an information processing apparatus and functions as a representative node that manages which processing node 20 is to execute data processing.

Each processing node 20 (20a or 20b) includes a buffer 22 (22a or 22b) and a processor 24 (24a or 24b). Each buffer 22 holds data DT input from outside of the data processing system 10. Each processor 24 processes the data DT held in the buffer 22 in the processing node 20, for example, in the first-in first-out order of the data DT stored in the buffer 22.

The management node 30 includes a prediction unit 32 and a transfer control unit 34. The prediction unit 32 and the transfer control unit 34 are implemented in such a way that a processor such as a CPU mounted in the management node 30 executes a control program. The prediction unit 32 predicts a time at which a resource load of the processing node 20 during execution of the data processing will reach a predetermined amount. Hereinafter, the predicted time at which the resource load of the processing node 20 will reach the predetermined amount is referred to as a predicted reaching time.

The prediction unit 32 predicts a boundary between processed data on which data processing has been completed and unprocessed data on which the data processing has not been completed at the predicted reaching time in the buffer 22 of the processing node 20 during execution of the data processing. The data is stored in the buffer 22 in processing order. The "boundary" is a storage position of data that was processed last among the processed data in the buffer 22 at the predicted reaching time. For example, the "boundary" is a storage position of data that will be processed first among the unprocessed data in the buffer 22 at the predicted reaching time.

Based on the prediction by the prediction unit 32, the transfer control unit 34 transfers the unprocessed data held in the buffer 22 at the predicted reaching time to another processing node 20 that will take over the data processing by transferring the unprocessed data in reverse processing order of the data processing down to the boundary. Hereinafter, the other processing node 20 that will take over the data processing is also referred to as a takeover node 20. For example, the transfer control unit 34 determines a transfer start position of the unprocessed data held in the buffer 22 of the processing node 20 during execution of the data processing based on the amount of data transferable to the takeover node 20 in a period from a time of the prediction by the prediction unit 32 to the predicted reaching time.

It is preferable that a resource load on the takeover node 20 that will take over the data processing be smaller than a resource load on the processing node 20 during execution of the data processing. For this reason, the management node 30 selects, as the takeover node 20, the processing node 20 having a resource load smaller than the resource load on the processing node 20 during the data processing. Thus, the data processing efficiency of the takeover node 20 may be made higher than the data processing efficiency of the processing node 20 that executes the data processing before the takeover, and the data processing may be continued without a failure. The resource load is determined depending on, for example, a usage rate of a processor such as a central processing unit (CPU) (not illustrated) mounted in the processor 24, a usage rate of a memory, and a used band of the network NW.

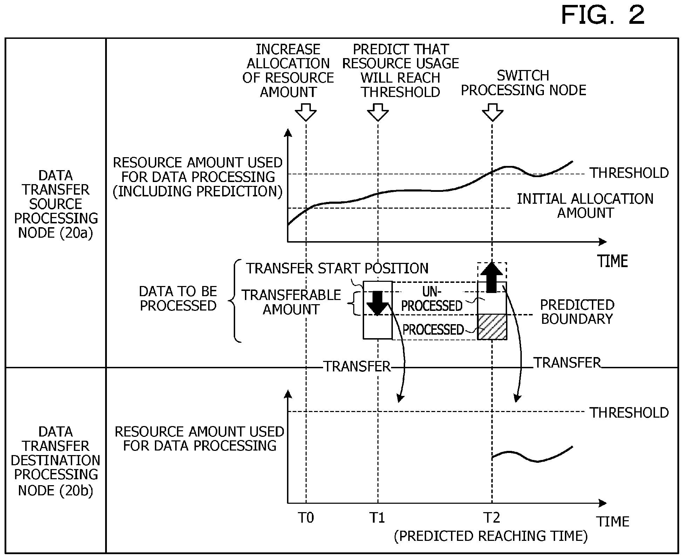

FIG. 2 illustrates an example of an operation of the data processing system 10 in FIG. 1. For example, the operation illustrated in FIG. 2 is implemented by the control program executed by the processor such as the CPU mounted in the management node 30. For example, FIG. 2 illustrates an example of a method of controlling the data processing system 10 and an example of a program for controlling the data processing system 10. In FIG. 2, the processing node 20a is a processing node of a data transfer source during execution of data processing and the processing node 20b is a processing node (takeover node) of a data transfer destination that will take over the data processing from the processing node 20a.

At time T0, the management node 30 increases allocation of an amount of resource (at least one of the usage rate of the processor and the usage rate of the memory) since the amount of resource used for data processing exceeds the amount of resource initially allocated in the processing node 20a. Whether to increase the allocation of the amount of resource may be predicted by the prediction unit 32.

Next, the prediction unit 32 predicts that the resource usage of the processing node 20a will reach a preset threshold at time T2 because the resource usage tends to increase at time T1. In this case, the prediction unit 32 predicts a boundary between data processed and data yet to be at time T2 by the processing node 20a among the data in the buffer 22a.

Based on the bandwidth of the network NW or the like, the transfer control unit 34 calculates the amount of data transferable from the processing node 20a to the processing node 20b in a period, based on the prediction by the prediction unit 32, from time T1 of the prediction that the threshold will be reached by the prediction unit 32 to the predicted reaching time T2. The transfer control unit 34 determines, as a data transfer start position, a position distant from the boundary predicted by the prediction unit 32 by the calculated amount of data transferable.

In FIG. 2, each rectangle indicated by "DATA TO BE PROCESSED" indicates the amount of data held in the buffer 22a, and the data stored in the buffer 22a is accumulated in order from the bottom in FIG. 2 and is processed in the order from the bottom. For example, in the data in the buffer 22a indicated by the rectangle, the lower, the earlier in the processing order, whereas the upper, the later in the processing order.

As indicated by a thick downward arrow, the transfer control unit 34 transfers the data to the processing node 20b via the network NW sequentially in order from the transfer start position to the boundary (for example, in reverse processing order). In the example of FIG. 2, the prediction by the prediction unit 32 is correct, and the processed data in the processing node 20a reaches the boundary at time T2. At time T2, the management node 30 stops the processing node 20a from executing the data processing and switches the node to execute the data processing from the processing node 20a to the processing node 20b.

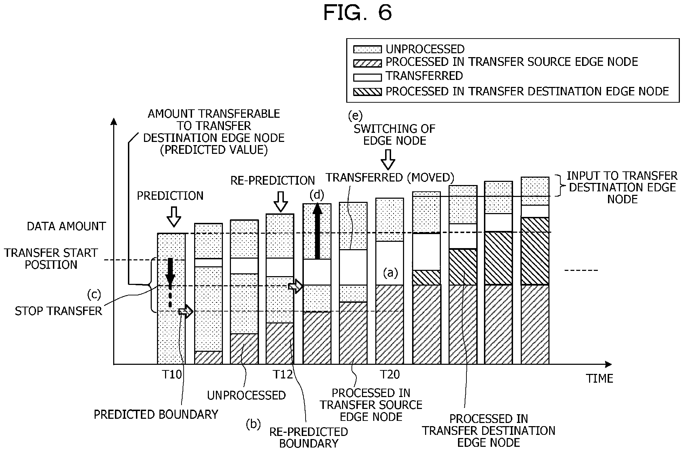

The execution of the data transfer in the reverse processing order makes it possible to avoid transfer of data processed by the processing node 20a to the processing node 20b, for example, when the data processing efficiency of the processing node 20a is improved. For example, when the processing on the data down to the boundary is completed before the predicted reaching time T2, the processing node 20a executes the processing on data behind the boundary in the processing order (data above the boundary in FIG. 2) until the predicted reaching time T2 arrives. In this case, the transfer of the data to the processing node 20b is stopped in the middle, which makes it possible to avoid unnecessary transfer of the processed data and to save the bandwidth of the network NW. An example in which the processing on the data down to the boundary is completed before the predicted reaching time T2 will be described with reference to FIG. 6.

The transfer start position is determined based on the amount of data transferable from time T1 to time T2. Thus, even when the data is transferred in the reverse processing order, the processing node 20b may execute the processing on the unprocessed data subsequent to the processing by the processing node 20a without disturbing the processing order. As a result, at time T2, the processing node 20b is capable of starting the processing without waiting for completion of the transfer of the unprocessed data, and this may suppress degradation in the processing performance of the data processing system 10.

At time T2, the data from the transfer start position to the boundary is already transferred to the buffer 22b of the processing node 20b. Thus, at time T2, the processing node 20b is capable of executing the data processing continuously immediately after taking over the data processing from the processing node 20a. For example, since a threshold of the processing node 20b that defines the upper limit of the resource usage is larger than a threshold of the processing node 20a, the processing node 20b is able to execute the data processing while leaving room in the resource usage. Therefore, the processing node 20b is able to continuously execute the data processing without causing a failure.

At time T2, as indicated by an upward thick arrow, the transfer control unit 34 starts processing in which data behind the data at the transfer start position in the processing order (new data in the storage order) is transferred to the buffer 22b of the processing node 20b in the processing order (in the storage order). The data transferred from the buffer 22a to the buffer 22b after time T2 includes the data located behind the transfer start position in the processing order at time T1 and data newly stored in the buffer 22a in the period from time T1 to time T2.

The transfer of data in the processing order after time T2 makes it possible to reduce the possibility that a transfer waiting time may occur due to a delay of the transfer of data to be processed by the processor 24b and accordingly to reduce the possibility that the data processing may be prolonged.

As described above, in the embodiment illustrated in FIGs. 1 and 2, the transfer control unit 34 transfers data in the reverse processing order to the processing node 20b that will take over the data processing. This may get rid of a situation where, when the processing efficiency of the processing node 20a is improved, data processed by the processing node 20a is transferred to the processing node 20b. As a result, it is possible to avoid unnecessary transfer of data to the processing node 20b, and to save the bandwidth of the network NW.

The transfer control unit 34 determines the transfer start position based on the amount of data transferable from time T1 to time T2. Thus, even when the data is transferred in the reverse processing order, the processing node 20b is capable of executing the processing on the unprocessed data that is yet to be processed by the processing node 20a at time T2 subsequent to the processing by the processing node 20a. For example, even when the data is transferred in the reverse processing order, the processing node 20b is able to start the processing at time T2 without waiting for the completion of the transfer of the unprocessed data, and this makes it possible to suppress degradation in the processing performance of the data processing system 10.

The transfer of data in the processing order after time T2 makes it possible to reduce the possibility that a transfer waiting time may occur due to a delay of the transfer of data to be processed by the processor 24b and accordingly to reduce the possibility that the data processing may be prolonged. When the processing node 20b having a smaller resource load than the resource load on the processing node 20a during execution of the data processing takes over the data processing, the data processing may be continued without a failure.

As described above, in this embodiment, it is possible to transfer data from the processing node 20 of the processing switching source to the processing node 20 of the processing switching destination without increasing the bandwidth of the network NW by reducing unnecessary data transfer and without stopping the processing during execution.

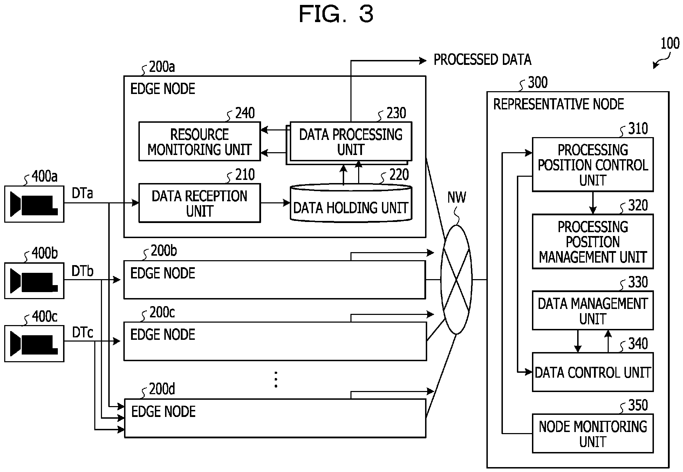

FIG. 3 illustrates an example of a data processing system according to another embodiment. Detailed description will be omitted for the same elements as those illustrated in FIGs. 1 and 2. A data processing system 100 illustrated in FIG. 3 includes a plurality of edge nodes 200 (200a, 200b, 200c, and 200d) that process data DT (DTa, DTb, and DTc), and a representative node 300 coupled to the edge nodes 200 via a network NW.

For example, the representative node 300 is a cloud server and controls the plurality of edge nodes 200 to implement edge computing. Each of the edge nodes 200 is an example of a processing node that processes data. The representative node 300 is a node that manages the edge nodes 200, and is an example of an information processing apparatus according to the other embodiment. Although not particularly limited, Kubernetes, which is a type of orchestrator, may be used to execute data transfer between the edge nodes 200. In this case, the edge nodes 200 may be, for example, containers operating on an operating system (OS) executed by a physical server managed by the representative node 300.

Each of the edge nodes 200 includes a data reception unit 210, a data holding unit 220, data processing units 230, and a resource monitoring unit 240. The data holding unit 220 is an example of a buffer, and each of the data processing units 230 is an example of a processing node. The data reception unit 210 receives data DT (DTa, DTb, or DTc) output from a data generation unit 400 (400a, 400b or 400c), and stores the received data DT in the data holding unit 220. For example, the data generation unit 400 is included in a device that sequentially generates the data DT in real time, such as a camera, a sensor, or a microphone. When the data generation unit 400 is in a video camera, the data generation unit 400 may output moving image data having a relatively large amount of data and still image data having a relatively small amount of data in a switching manner. A plurality of data generation units 400 may be provided along a line of a manufacturing factory in order to monitor manufacturing processes of articles or the like.

The data holding unit 220 is a storage such as, for example, a hard disk drive (HDD) or a solid-state drive (SSD), and stores data DT received by the data reception unit 210. The data generation unit 400 may compress the generated data DT and transmit the compressed data DT to each of the edge nodes 200.

The data processing unit 230 processes the data DT held in the data holding unit 220 in chronological order (in order in which the data DT is generated by the data generation unit 400), and outputs the processing result (processed data) to a data management apparatus (not illustrated). The processed data may be transferred to the representative node 300. The processed data may be temporarily held in the data holding unit 220 or may be temporarily held in a buffer memory (not illustrated) included in each edge node 200.

The data processing unit 230 may execute processing of compressing the data DT and output the compressed data DT to a data management apparatus (not illustrated). In FIG. 3, the edge node 200 includes the two data processing units 230, but the number and performance of the data processing units 230 are determined in accordance with the amount of data output from the data generation units 400 and the load amount of data processing.

The resource monitoring unit 240 monitors a resource state such as a resource usage (resource load) in the edge node 200. For example, the resource monitoring unit 240 monitors the resource usage of the data processing unit 230, and notifies the representative node 300 of the resource usage in response to an inquiry from the representative node 300.

For example, the processing performance of the edge node 200d is higher than the processing performance of the edge nodes 200a, 200b, and 200c. The edge node 200d may function as a substitute node that executes processing instead of the edge node 200a, 200b or 200c in which the resource usage is predicted to exceed a threshold. The edge node 200d may have a function to process data generated by another data generation unit (not illustrated) in addition to the function as the substitute node.

Each of the edge nodes 200, if having room in the resource usage, may function as a substitute node that executes processing instead of another edge node 200 in which the resource usage exceeds the threshold. For example, in an edge node 200 coupled to the data generation unit 400 that outputs a video image as the data DT, a load of data processing increases as the number of processing targets (persons or automobiles) included in the image increases. When it is predicted that the resource usage will exceed the threshold along with an increase in the number of processing targets, the processing is switched to another edge node 200 (for example, 200d) having room in the resource usage. The representative node 300 to be described below predicts whether or not the resource usage will exceed the threshold.

The representative node 300 includes a processing position control unit 310, a processing position management unit 320, a data management unit 330, a data control unit 340, and a node monitoring unit 350. A processor such as a CPU mounted in the representative node 300 executes a control program to implement the processing position control unit 310, the processing position management unit 320, the data management unit 330, the data control unit 340, and the node monitoring unit 350.

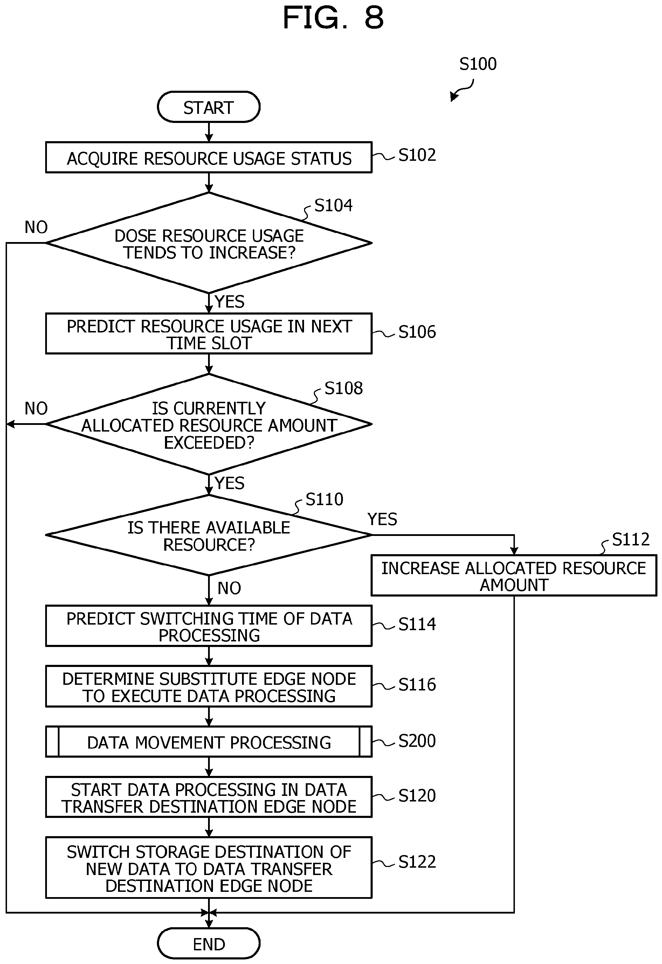

The processing position control unit 310 controls which edge node 200 is to process data DT generated by the data generation unit 400. To this end, the processing position control unit 310 predicts a change in the resource usage (resource load) of each edge node 200 and performs control of switching the edge node 200 to process the data when predicting that the resource usage will exceed the threshold. The processing position control unit 310 notifies the processing position management unit 320 of the control states of the edge nodes 200. The operation of the processing position control unit 310 will be described with reference to FIG. 8.

The processing position management unit 320 manages which edge node 200 is processing the data DT generated by the data generation unit 400 based on the control of switching the edge node 200 by the processing position control unit 310.

The data management unit 330 manages information for each of the edge nodes 200 such as the size of the data DT held by the edge node 200, the generation time of the data DT, the type of the data DT, and identification information of the data generation unit 400 that generated the data DT. The data management unit 330 notifies the data control unit 340 of the managed information.

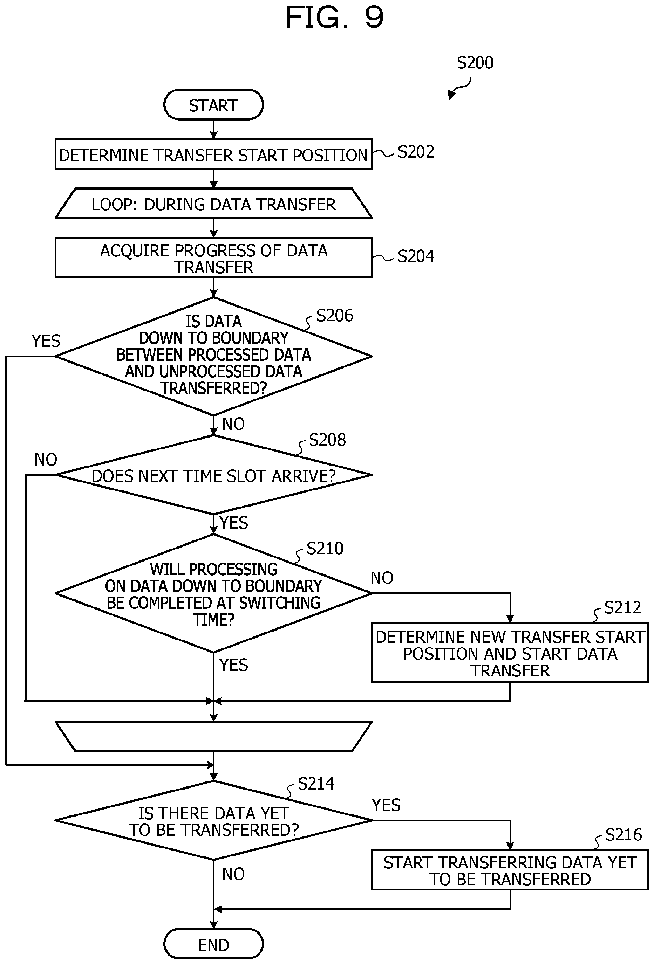

When the processing position control unit 310 determines to switch the edge node 200, the data control unit 340 controls movement of the data from the edge node 200 that is executing the processing to the edge node 200 that will take over the processing. The data control unit 340 notifies the data management unit 330 of information on the moved data. For example, the data control unit 340 performs control to avoid transfer of unnecessary data to the edge node 200 that will take over the processing. The data control unit 340 controls the transfer order of data so as to enable the edge node 200 that takes over the processing to start the data processing immediately after taking over the processing. The operation of the data control unit 340 will be described with reference to FIG. 9.

The node monitoring unit 350 monitors the resource usage of each edge node 200 based on the load amount or the like of the data processing unit 230 acquired by the resource monitoring unit 240 of the edge node 200, and notifies the processing position control unit 310 of the monitored resource usage.

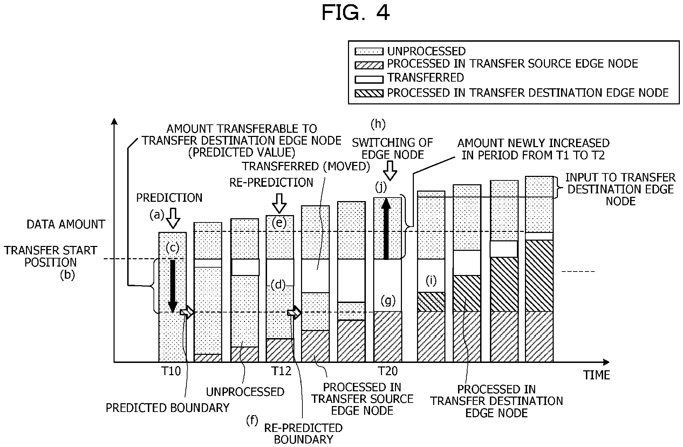

FIG. 4 illustrates an example of an operation of the data processing system 100 in FIG. 3. Detailed description will be omitted for the same part of the operation as in FIG. 2. At the start in FIG. 4, the edge node 200a executes the processing on data generated by the data generation unit 400.

In FIG. 4, data represented by a dotted rectangle indicates unprocessed data. Data represented by a rectangle hatched with thin lines indicates data already processed by the edge node 200a of the data transfer source. Data represented by a hollow rectangle indicates data already transferred to the edge node 200b of the data transfer destination. Data represented by a rectangle hatched with thick lines indicates data already processed by the edge node 200b. The rectangles with various patterns represent the data held in the data holding unit 220 of the edge node 200a except for data indicated by "INPUT TO TRANSFER DESTINATION EDGE NODE" on the upper right side in FIG. 4. The lower in the rectangle, the older in the storage order (the earlier in the processing order).

At time T10, the processing position control unit 310 of the representative node 300 predicts, based on the information from the node monitoring unit 350, that the edge node 200a during the data processing will have an increase in the load and a shortage of the resource usage at time T20 ((a) in FIG. 4). The prediction at time T10 is an example of first prediction and is an example of previous prediction. It is assumed that the upper limit of resource is allocated for data processing. The processing position control unit 310 also predicts a boundary between the processed data and the unprocessed data at time T20. Time T20 is a predicted reaching time at which the amount of resource used by the edge node 200a will predictably reach the threshold.

The processing position control unit 310 searches for another edge node 200 capable of executing the data processing instead of the edge node 200a. For example, the processing position control unit 310 determines that an amount of resource allocated to the edge node 200b is sufficient to take over the data processing from edge node 200a and execute the data processing, determines to cause the edge node 200b to take over the processing, and notifies the data control unit 340 of the determination result.

At time T10, the data control unit 340 calculates the amount of data transferable from the edge node 200a to the edge node 200b from time T10 to time T20 based on the bandwidth of the network NW or the like. The data control unit 340 determines a transfer start position of data to be transferred from the edge node 200a to the edge node 200b based on the calculated amount of data transferable and the boundary between the processed data and the unprocessed data at time T20 ((b) in FIG. 4).

The transfer start position is set to the position of the last data in the processing order among the transferable data. At time T10, the data control unit 340 starts transferring the data from the edge node 200a to the edge node 200b starting with the transfer start position. A thick arrow illustrated at time T10 indicates the transfer order (transfer direction) of data to be transferred to the edge node 200b and the amount of data transferable by time T20 ((c) in FIG. 4). The data control unit 340 that executes the data transfer from the edge node 200a to the edge node 200b based on the prediction of the boundary by the processing position control unit 310 is an example of a transfer control unit.

As the time elapses, the amount of data already processed by the edge node 200a (transfer source) increases, and the amount of data already transferred to the edge node 200b increases ((d) in FIG. 4). Since the data generated by the data generation unit 400 is stored in the data holding unit 220 of the edge node 200a until time T20, the unprocessed data gradually increases ((e) in FIG. 4).

Next, at time T12, the data control unit 340 re-predicts the boundary between the processed data and the unprocessed data at time T20. The re-prediction of the boundary between the processed data and the unprocessed data at the time T20 is repeatedly executed at a predetermined frequency (for example, once every second) until time T20 arrives. This makes it possible to adjust the predicted value of the boundary at time T20 in accordance with a change in the data processing rate of the edge node 200a, and therefore reduce an excess or deficiency of data such as unnecessary data transfer and occurrence of data yet to be transferred at time T20.

In this embodiment, the data control unit 340 performs the re-prediction of the boundary. Instead, the processing position control unit 310 may perform the re-prediction and notify the data control unit 340 of the prediction result. The processing position control unit 310 that predicts the boundary and the data control unit 340 that re-predicts the boundary are examples of a prediction unit.

In the example illustrated in FIG. 4, the boundary re-predicted by the data control unit 340 is the same as the boundary predicted at time T10 by the processing position control unit 310 ((f) in FIG. 4). Therefore, the data control unit 340 continues the transfer of the data from the edge node 200a to the edge node 200a.

When time T 20 arrives, the data processing in the edge node 200a is completed down to the predicted boundary, and the transfer of the data to the edge node 200b is completed down to the predicted boundary. For example, the transfer of the data from the transfer start position to the boundary is completed ((g) in FIG. 4). At time T20, the processing position control unit 310 causes the edge node 200b to start the processing on the data transferred from the edge node 200a. For example, the edge node 200 to process the data is switched ((h) in FIG. 4). Thus, after time T20, the data processing in the edge node 200b proceeds as illustrated by the rectangles hatched with thick lines ((i) in FIG. 4).

At time T20, the data control unit 340 starts transferring the remaining part of the data held in the data holding unit 220 of the edge node 200a to the edge node 200b. In this data transfer, the data control unit 340 transfers the data in the processing order as indicated by a thick arrow ((j) in FIG. 4). Even when the data processing rate in the edge node 200b is higher than the data transfer rate, for example, the above data transfer makes it possible to avoid a failure in which the processing in the edge node 200b is stopped because data to be processed fails to be transferred to the edge node 200b in time.

At time T20, the data generation unit 400 having been coupled to the edge node 200a is coupled to the edge node 200b. Therefore, after time T20, the data DT generated by the data generation unit 400 is input to the edge node 200b and stored in the data holding unit 220 of the edge node 200b.

The timing (time T10) at which the boundary between the processed data and the unprocessed data is predicted based on the resource usage arrives at predetermined cycles for each of the edge nodes 200 executing data processing. For example, the predetermined cycle may be equal to a time period from time T10 to time T20. In this case, after the edge node 200b to which the data is transferred starts the processing at time T20, the processing position control unit 310 predicts the boundary between the processed data and the unprocessed data in the edge node 200b every time the predetermined cycle elapses. The representative node 300 performs the same operation on the edge node 200b as the operation described with reference to FIG. 4.

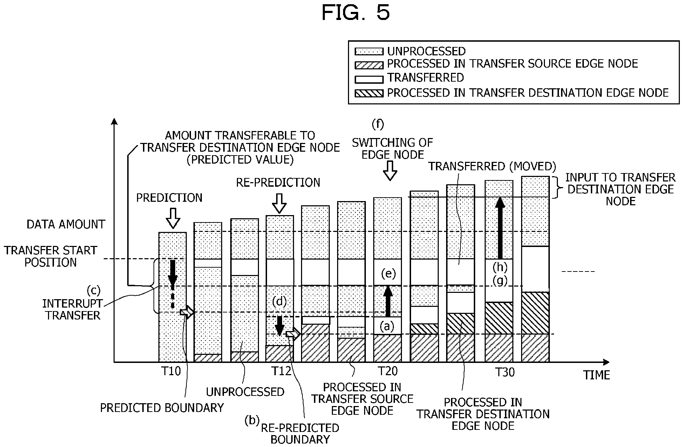

FIG. 5 illustrates another example of an operation of the data processing system 100 in FIG. 3. Detailed description will be omitted for the same part of the operation as in FIG. 4. The followings are the same as in FIG. 4: time T20 for which the processing position control unit 310 makes the prediction at time T10; the boundary between the processed data and the unprocessed data at time T20; the transfer start position at time T10; and the data transfer direction at time T10. In FIG. 5, as compared with the prediction at time T10 by the processing position control unit 310, the progress of the processing in the edge node 200a is left behind and the amount of unprocessed data at time T20 increases ((a) in FIG. 5). For example, the amount of processed data decreases as compared with the amount first predicted at time T10.

At time T12, the data control unit 340 re-predicts the boundary between the processed data and the unprocessed data at time T20. In the example illustrated in FIG. 5, since the progress of the processing in the edge node 200a is left behind, the boundary predicted by the data control unit 340 is located below the boundary predicted at time T10 by the processing position control unit 310 in FIG. 5 ((b) in FIG. 5).

The data located between the boundary predicted at time T10 and the boundary re-predicted at time T12 is data to be processed by the edge node 200a by time T20 according to the prediction at time T10. However, since the progress of the processing in the edge node 200a is left behind, the data between the two boundaries is data that will be processed by the edge node 200b after time T20 according to the re-prediction at time T12.

In order to stop unnecessary transfer of data that will not be processed by the edge node 200a, the data control unit 340 interrupts the transfer of the data starting with the transfer start position ((c)) in FIG. 5). The data stopped from being transferred due to the interruption is indicated by a thick broken line at time T10. At time T12, as indicated by a thick downward arrow, the data control unit 340 starts transferring, to the edge node 200b, data in an amount transferable by time T20 in the reverse processing order down to the re-predicted boundary ((d) in FIG. 5).

When it is determined that the processing rate in the edge node 200a decreases as a result of the re-prediction of the boundary, the data transfer during execution is interrupted, and the data is transferred in the reverse processing order toward the re-predicted boundary. In this way, it is possible to suppress a delay of the start of the processing by the edge node 200b that takes over the processing because the data to be processed by the edge node 200b is yet to be transferred to the edge node 200b at time T20. For example, it is possible to suppress degradation in the processing performance of the data processing system 100.

The transfer of data in the reverse processing order toward the re-predicted boundary makes it possible to stop data that will be processed in the edge node 200a by time T20 from being unnecessarily transferred to the edge node 200b. For example, when the boundary in the next re-prediction (not illustrated) before time T20 is located above the re-predicted boundary at time T12 due to an improvement of the processing rate in the edge node 200a, it is possible to interrupt the data transfer to the edge node 200b started from time T12. This may stop data that will be processed in the edge node 200a by time T20 from being unnecessarily transferred to the edge node 200b.

In contrast, if the data were transferred in the processing order from the boundary re-predicted at time T12 to the boundary predicted at time T10, unnecessary data might be transferred. For example, if the boundary in the next re-prediction (not illustrated) before time T20 is above the boundary re-predicted at time T12 in FIG. 5, data on which the processing will be completed in the edge node 200a by time T20 is transferred to the edge node 200b.

Referring back to the operation in FIG. 5, at time T20, as indicated by a thick arrow, the data control unit 340 restarts transferring data from the edge node 200a to the edge node 200b, the data including the data the transfer of which is interrupted at time T12 ((e) in FIG. 5). This may suppress a failure to transfer the data, the transfer of which is interrupted, to the edge node 200b.

In this data transfer, the data control unit 340 transfers the data in the processing order. For example, the data transfer direction is opposite to the data transfer direction of the data transfer starting with the transfer start position at time T10. The transfer of data in the processing order after the switching of the edge node 200 makes it possible to reduce the possibility of occurrence of a failure in which the processing fails to start because data to be processed is yet to be transferred. For example, when the data processing rate in the edge node 200b is higher than the data transfer rate and the data to be processed fails to be transferred to the edge node 200b in time, the processing in the edge node 200b has to wait, so that the processing efficiency may decrease. As a result, even when real-time processing is requested, the real-time performance may not be maintained.

At time T20, the processing position control unit 310 causes the edge node 200b to start the processing on the data transferred from the edge node 200a as in FIG. 4. For example, the edge node 200 to process data is switched ((f) in FIG. 5). The data generation unit 400 having been coupled to the edge node 200a is coupled to the edge node 200b. Therefore, after time T20, the data DT generated by the data generation unit 400 is input to the edge node 200b and stored in the data holding unit 220 of the edge node 200b.

At time T30, the data from the transfer start position to the boundary predicted at time T10 is completely transferred to the edge node 200b ((g)) in FIG. 5). After that, as indicated by a thick upward arrow at time T30, the data control unit 340 starts transferring data to the edge node 200b, the data held in the data holding unit 220 of the edge node 200a and located behind the transfer start position in the processing order ((h) in FIG. 5). The data is transferred in the processing order. Therefore, the possibility of occurrence of a failure in which the processing stops because the processing proceeds to a data region yet to be transferred to the edge node 200b may be reduced as compared with the case where the data is transferred in the reverse processing order.

FIG. 6 illustrates still another example of an operation of the data processing system 100 in FIG. 3. Detailed description will be omitted for the same part of the operation as in FIGs. 4 and 5. The followings are the same as in FIG. 4: time T20 for which the processing position control unit 310 makes the prediction at time T10; the boundary between the processed data and the unprocessed data at time T20; the transfer start position at time T10; and the data transfer direction at time T10. In FIG. 6, as compared with the prediction at time T10 by the processing position control unit 310, the progress of the processing in the edge node 200a goes ahead and the amount of processed data at time T20 increases ((a) in FIG. 6).

At time T12, the data control unit 340 re-predicts the boundary between the processed data and the unprocessed data at time T20. In the example illustrated in FIG. 6, since the progress of the processing in the edge node 200a goes ahead, the boundary predicted by the data control unit 340 is located above the boundary predicted at time T10 by the processing position control unit 310 in FIG. 6 ((b) in FIG. 6).

For example, in the re-prediction at time T12, the data including data between the boundary predicted at time T10 and the boundary re-predicted at time T12 is predicted to be processed by time T20. In order to stop unnecessary transfer of data that will not be processed by the edge node 200b, the data control unit 340 stops the transfer of the data from the boundary re-predicted at time T12 to the boundary predicted at time T10 ((c) in FIG. 6). This makes it possible to avoid the use of the bandwidth of the network NW for the unnecessary data transfer.

After time T12, the data control unit 340 transfers the data from the edge node 200a to the edge node 200b in the processing order staring with the transfer start position ((d) in FIG. 6). Accordingly, as in FIGs. 4 and 5, even when the data processing rate in the edge node 200b is higher than the data transfer rate, for example, the above data transfer makes it possible to avoid a failure in which the processing in the edge node 200b is stopped because data to be processed fails to be transferred to the edge node 200b in time.

As in FIGs. 4 and 5, at time T20, the data generation unit 400 having been coupled to the edge node 200a is coupled to the edge node 200b. Therefore, after time T20, the information generated by the data generation unit 400 is input to the edge node 200b and stored in the data holding unit 220 of the edge node 200b.

At time T20, the processing position control unit 310 causes the edge node 200b to start processing the data transferred from the edge node 200a. For example, the edge node 200 to process data is switched ((e) in FIG. 6).

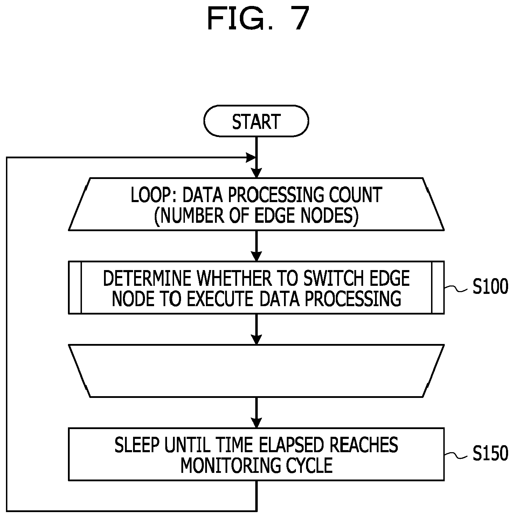

FIG. 7 illustrates an example of an operation of the representative node 300 in FIG. 3. For example, operations illustrated in FIGs. 7 to 9 are implemented by the control program executed by the processor such as the CPU mounted in the representative node 300. For example, FIGs. 7 to 9 illustrate an example of a method of controlling the data processing system 100 and an example of a program for controlling the data processing system 100.

The representative node 300 executes step 100 according to the number of edge nodes 200 each being executing data processing. For example, the data processing is executed in the unit of the edge node 200 in the same manner as in FIGs. 4 to 6. The edge node 200 corresponds to, for example, a container operating on an operating system (OS) executed by a physical server.

At step S100, the representative node 300 monitors the resource usage of each edge node 200 being executing data processing and determines whether to switch the edge node 200 to another edge node 200 for the execution of the data processing. When the representative node 300 determines to switch, the representative node 300 executes switching processing. An example of the processing at step S100 is illustrated in FIGs. 8 and 9.

After determining to switch the edge node 200 and preforming the switching processing, the representative node 300 sleeps at step S150 until the time elapsed reaches a monitoring cycle (for example, 10 seconds), and executes step S100 for each edge node 200 when the time elapsed reaches the monitoring cycle.

FIG. 8 illustrates an example of step S100 illustrated in FIG. 7. The processing illustrated in FIG. 8 is executed by the processing position control unit 310 of the representative node 300. As described with reference to FIG. 7, step S100 is executed for each edge node 200, which is a run unit for data processing. For this reason, the following description will be given of switching determination and switching processing for one edge node 200 of interest.

First, at step S102, the processing position control unit 310 acquires resource usage states of the edge node 200 from the node monitoring unit 350. Next, at step S104, the processing position control unit 310 determines whether the resource usage tends to increase based on the information acquired from the node monitoring unit 350. The resource usage includes a CPU usage rate and a memory usage rate.

When the resource usage tends to increase, the processing position control unit 310 executes step S106 to determine whether or not to switch the edge node 200. When the resource usage does not tend to increase, the edge node 200 does not have to be switched, and thus the processing position control unit 310 ends the processing illustrated in FIG. 8.

At step S106, the processing position control unit 310 predicts the resource usage of each resource in the edge node 200 in the next time slot (for example, after one minute). Next, at step S108, the processing position control unit 310 determines, for each resource, whether the predicted resource usage exceeds the amount of resource currently allocated to the edge node 200. When the predicted value of the resource usage of any resource exceeds the amount of resource currently allocated, the processing position control unit 310 executes step S110. When the predicted values of the resource usage of all the resources are equal to or smaller than the amounts of resources currently allocated, the processing position control unit 310 ends the processing illustrated in FIG. 8.

At step S110, the processing position control unit 310 determines whether or not a resource, the amount of which is predicted to be insufficient, is still available in the edge node 200. The processing position control unit 310 executes step S112 when the resource is available, and executes step S114 when the resource is not available.

For example, for each resource in which the predicted value of the resource usage exceeds the amount of resource currently allocated, the processing position control unit 310 executes step S112 when it is possible to cancel the excess of the predicted resource usage by allocating the available amount of the resource. Alternatively, for at least any one resource in which the predicted value of the resource usage exceeds the amount of resource currently allocated, the processing position control unit 310 executes step S114 when it is not possible to cancel the excess of the predicted resource usage even by allocating the available amount of the resource.

At step S112, for each resource in which the predicted value of the resource usage exceeds the amount of resource currently allocated, the processing position control unit 310 increases the amount of resource allocated and ends the processing illustrated in FIG. 8. The amount of resource allocated may be changed by a resource amount management unit (not illustrated) that manages the amounts of resources in each edge node 200 based on an instruction from the processing position control unit 310.

At step S114, the processing position control unit 310 predicts a time (for example, time T20 in FIGs. 4 to 6) at which the edge node 200 to execute the data processing will be switched to another edge node 200 having room in the amounts of resources. For example, the processing position control unit 310 predicts a time at which the edge node 200 during execution of the data processing will have a shortage of the resource usage.

Next, at step S116, the processing position control unit 310 determines a substitute edge node 200 that will execute the data processing instead of the edge node 200 during execution of the data processing. The processing position control unit 310 notifies the processing position management unit 320 of information on the substitute edge node 200 thus determined. For example, the resource load on the substitute edge node 200 that will execute the data processing is preferably smaller than the resource load on the edge node 200 that is executing the data processing.

Next, at step S200, the processing position control unit 310 causes the data control unit 340 to execute movement processing of moving (transferring) the data from the edge node 200 that is executing the data processing to the substitute edge node 200 that will execute the data processing. An example of step S200 will be described with reference to FIG. 9.

After step S200 is executed, the processing position control unit 310 causes the edge node 200 of the data transfer destination to start the data processing at step S120. The processing position control unit 310 stops the data processing in the edge node 200 of the data transfer source. Even after the data processing is started in the edge node 200 of the data transfer destination, the data transfer is continued until the unprocessed data held in the edge node 200 of the data transfer source does not exist any more.

Next, at step S122, the processing position control unit 310 switches the transfer destination of new data generated by the data generation unit 400 from the edge node 200 of the data transfer source to the edge node 200 of the data transfer destination, and ends the processing illustrated in FIG. 8.

FIG. 9 illustrates an example of processing at step S200 in FIG. 8. The processing illustrated in FIG. 9 is executed by the data control unit 340 of the representative node 300. The data control unit 340 may notify the data management unit 330 of the status of the data transfer.

First, at step S202, the data control unit 340 calculates, based on the bandwidth of the network NW or the like, the amount of data transferable by the switching time predicted by the processing position control unit 310 at step S114 in FIG. 8. For example, the data control unit 340 calculates the amount of data transferable by the switching time from the boundary predicted by the processing position control unit 310 in FIGs. 4 to 6. The data control unit 340 determines the transfer start position described with reference to FIGs. 4 to 6 based on the calculated amount of data transferable and starts the data transfer from the transfer start position.

Steps S204, S206, S208, S210, and S212 executed after step S202 are iterated until the data transfer (movement) is completed. At step S204, the data control unit 340 acquires the progress of the data transfer based on, for example, a pointer used for the data transfer.

Next, at step S206, the data control unit 340 determines whether or not the data transfer is completed down to the boundary between the processed data and the unprocessed data at the switching time of the edge node 200 predicted by the processing position control unit 310. The data control unit 340 executes step S214 when the data transfer down to the boundary is completed, or executes step S208 when the data transfer down to the boundary is not completed.

At step S208, the data control unit 340 determines whether or not the next time slot arrives. For example, in the example illustrated in FIGs. 4 to 6, the next time slot is time T12. When the next time slot arrives, the data control unit 340 executes step S210 to execute re-prediction. When the next time slot does not arrive yet, the data control unit 221 executes step S204.

At step S210, the data control unit 340 determines whether or not the processing on the data down to the boundary will be completed at the switching time of the edge node 200 predicted by the processing position control unit 310. The data control unit 340 continues the data transfer if the processing on the data down to the boundary will be completed at the switching time or executes step S212 if the processing on the data down to the boundary will not be completed at the switching time. The operations illustrated in FIGs. 4 and 6 cope with a case where the processing on the data down to the boundary will be completed at the switching time, and the operation illustrated in FIG. 5 copes with a case where the processing on the data down to the boundary will not be completed at the switching time.

At step S212, the data control unit 340 interrupts the data transfer from the transfer start position, determines a new transfer start position, and starts the data transfer. For example, as illustrated in (d) in FIG. 5, the data control unit 340 transfers data in the order from the boundary predicted by the processing position control unit 310 toward the new boundary re-predicted. After step S212, the data control unit 340 executes step S204.

At step S214, the data control unit 340 determines whether the edge node 200 of the transfer source still holds any data yet to be transferred after the data transfer until the switching time of the edge node 200 predicted by the processing position control unit 310. The data control unit 340 executes step S216 if the edge node 200 of the transfer source holds the data yet to be transferred or ends the processing in FIG. 9 if the edge node 200 of the transfer source does not hold any data yet to be transferred.

At step S216, the data control unit 340 starts transferring the data yet to be transferred from the edge node 200 of the transfer source to the edge node 200 of the transfer destination and ends the processing in FIG. 9. As described with reference to FIGs. 4 to 6, the transfer of data yet to be transferred is continued until the transfer is completed even after the edge node 200 to process the data is switched.

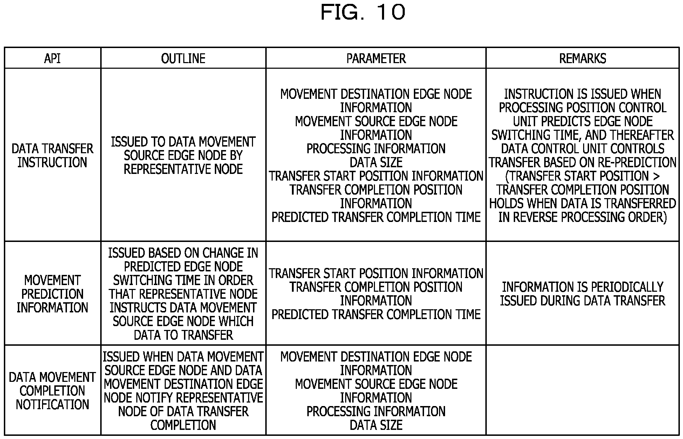

FIG. 10 illustrates examples of application programming interface (API) used for data transfer between the representative node 300 and each of the edge nodes 200 in FIG. 3. Examples of the API include a data transfer instruction, movement prediction information, and a data movement completion notification.

The data transfer instruction is issued from the representative node 300 to the edge node 200 of the data movement source. The data transfer instruction is issued only once when the processing position control unit 310 predicts the switching time of the edge node 200 for the first time, and thereafter, the data control unit 340 controls the transfer based on the re-prediction. For example, data is stored from the data generation unit 400 into the data holding unit 220 of the edge node 200 in ascending order of address. In a case where the data stored in the data holding unit 220 is transferred in the reverse processing order, the address of the transfer start position > the address of the transfer completion position holds.

The movement prediction information is issued based on a change in the predicted switching time of the edge node 200 in order that the representative node 300 instructs the edge node 200 of the data movement source which data to transfer. The movement prediction information is periodically issued during the data transfer.

The data movement completion notification is issued when the edge node 200 of the data movement source and the edge node 200 of the data movement destination notify the representative node 300 of the completion of the data transfer.

As described above, the embodiment illustrated in FIGs. 3 to 10 is also capable of obtaining the effect similar to the effect of the embodiment illustrated in FIGs. 1 and 2. For example, when it is predicted that the resource usage of the edge node 200 during execution of the data processing will become insufficient at certain time T20, the data is transferred in the reverse processing order to the edge node 200 that will take over the data processing. Accordingly, it is possible to avoid transfer of unnecessary data to the edge node 200 that will take over the data processing, and to save the bandwidth of the network NW.

A transfer start position is determined based on the amount of data transferable from time T10 when the boundary is predicted to time T20 when the edge node 200 will be switched. Thus, at the switching time T20, the data processing may be taken over without being stopped, and degradation in the processing performance of the data processing system 100 may be suppressed. Therefore, it is possible to transfer data from the edge node 200 of the processing switching source to the edge node 200 of the processing switching destination without increasing the bandwidth of the network NW by avoiding unnecessary data transfer and without stopping the processing during execution.

In the embodiment illustrated in FIGs. 3 to 10, when it is determined that unprocessed data increases as a result of the re-prediction of the boundary, the data transfer executed from the transfer start position is interrupted, and the data transferable by time T20 is transferred in the reverse processing order toward the re-predicted boundary. Thus, when the processing rate in the edge node 200a increases afterward, it is possible to interrupt the data transfer started from time T12 and therefore avoid unnecessary transfer of the processed data to the edge node 200b.

When it is determined that the processing rate in the edge node 200a decreases as a result of the re-prediction of the boundary, the data transfer during execution is interrupted, and the data is transferred in the order toward the re-predicted boundary. This makes it possible to suppress a delay of the start of the processing by the edge node 200b. This is also capable of suppressing degradation in the processing performance of the data processing system 100. The transfer of data in the reverse processing order toward the re-predicted boundary makes it possible to stop data that will be processed in the edge node 200a by time T20 from being unnecessarily transferred to the edge node 200b.

At time T20, the transfer of the data including the data, the transfer of which is interrupted, to the edge node 200b is restarted. Thus, it is possible to suppress a failure to transfer the data, the transfer of which is interrupted, to the edge node 200b. In this case, the transfer of the data in the processing order makes it possible to reduce the possibility of occurrence of a failure to start the processing because the data to be processed is yet to be transferred.

In a case where it is determined that the processing rate in the edge node 200a is improved as a result of the re-prediction of the boundary, the transfer of the data from the re-predicted boundary to the boundary previously predicted is stopped. This makes it possible to avoid the use of the bandwidth of the network NW for unnecessary data transfer.

The repetitive execution of the re-prediction of the boundary at the predetermined frequency makes it possible to adjust the predicted value of the boundary in accordance with a change in the data processing rate of the edge node 200a, and therefore reduce an excess or deficiency of data such as unnecessary data transfer and occurrence of data yet to be transferred at time T20.

Features and advantages of the embodiments are apparent from the detailed description above. The scope of claims is intended to cover the features and advantages of the embodiments described above within a scope not departing from the spirit and scope of right of the claims. Any person having ordinary skill in the art may easily conceive every improvement and alteration. Accordingly, the scope of inventive embodiments is not intended to be limited to that described above and may rely on appropriate modifications and equivalents included in the scope disclosed in the embodiment.

## Claims

1. An information processing apparatus that manages a plurality of processing nodes each including a buffer and a processor that processes data held in the buffer, the information processing apparatus comprising:
a prediction unit that predicts a boundary between processed data and unprocessed data in the buffer at a predicted reaching time at which a resource load of a certain processing node during data processing will reach a predetermined amount; and
a transfer control unit that transfers, in reverse processing order toward the boundary, the unprocessed data to another processing node that will take over the data processing.

2. The information processing apparatus according to claim 1, wherein
the transfer control unit transfers a certain an amount of the unprocessed data to be transferred to the other processing node in the reverse processing order, the certain amount being transferable from the boundary by the predicted reaching time.

3. The information processing apparatus according to claim 1, wherein
the prediction unit re-predicts the boundary during the transfer of the unprocessed data from the certain processing node to the other processing node, and
when the prediction unit re-predicts that the amount of the unprocessed data at the predicted reaching time is larger than the previous prediction, the transfer control unit interrupts the transfer of the unprocessed data in the reverse processing order toward the previous boundary, and transmits the unprocessed data in the buffer to the other processing node in the reverse processing order from the re-predicted boundary for an amount being transferable by the predicted reaching time.

4. The information processing apparatus according to claim 3, wherein
after completion of the transfer of the unprocessed data transferable by the predicted reaching time to the other processing node, the transfer control unit transfers the unprocessed data, the transfer of which has been interrupted, to the other processing node in processing order.

5. The information processing apparatus according to claim 3, wherein
when the prediction unit re-predicts that the unprocessed data at the predicted reaching time is smaller than the previous prediction, the transfer control unit first transfers the unprocessed data in the reverse processing order down to the re-predicted boundary, and then starts transferring the unprocessed data behind a data transfer start position determined in the previous prediction in processing order.

6. The information processing apparatus according to claim 2, wherein
the prediction unit re-predict the boundary at a predetermined frequency during the transfer of the unprocessed data from the certain processing node to the other processing node.

7. The information processing apparatus according to any one of claims 1 to 6, wherein
the transfer control unit determines a transfer start position of the unprocessed data to be transferred based on an amount of data transferable to the other processing node in a period from a time at which the prediction unit makes the prediction to the predicted reaching time.

8. The information processing apparatus according to any one of claims 1 to 7, wherein
the other processing node that will take over the data processing is selected from among processing nodes having a resource load smaller than the resource load of the certain processing node during the data processing.

9. A method of controlling information processing apparatus managing a plurality of processing nodes each including a buffer and a processor that processes data held in the buffer, the method comprising:
predicting a boundary between processed data and unprocessed data in the buffer at a predicted reaching time at which a resource load of a certain processing node during data processing will reach a predetermined amount; and
transferring, in reverse processing order toward the boundary, the unprocessed data to another processing node that will take over the data processing.

10. A program for controlling information processing apparatus managing a plurality of processing nodes each including a buffer and a processor that processes data held in the buffer, the program causing the information processing apparatus to perform a process comprising:
predicting a boundary between processed data and unprocessed data in the buffer at a predicted reaching time at which a resource load of a certain processing node during data processing will reach a predetermined amount; and
transferring, in reverse processing order toward the boundary, the unprocessed data to another processing node that will take over the data processing.
